# DEMANDE DE BREVET EUROPEEN

(11) **EP 1 265 418 A2**
(43) Date de publication de la demande: **11.12.2002**
(21) Numéro de dépôt: 02291199.4
(22) Date de dépôt: 14.05.2002
(51) Int. Cl.: H04L 29/06, B60R 16/02

(54) **Système de téléchargement à bord d'un véhicule**

(30) Priorité: 08.06.2001 FR 0107545
(71) Demandeur: Peugeot Citroen Automobiles SA, 92200 Neuilly sur Seine (FR)
(72) Inventeur: Lopez, Thierry, 78700 Conflans-Sainte-Honorine (FR)
(74) Mandataire: Habasque, Etienne Joel Jean-François

(57) **Abrégé**

Ce système utilisant un outil de téléchargement (1) raccordé à un réseau (7) de transmission d'informations auquel sont également raccordés les calculateurs (4,5,6), et comportant des moyens (11,12,13) de formation de trames de données à partir de fichiers correspondants (8,9,10) pour ces calculateurs et des moyens d'émission (14) de celles-ci à destination des calculateurs correspondants à travers le réseau, les calculateurs étant adaptés pour émettre à destination de moyens (17) de réception correspondants de l'outil, une information de fin de traitement de trame reçue pour piloter les moyens d'émission (14) afin de déclencher l'émission d'une trame suivante sur le réseau, est caractérisé en ce que les moyens d'émission (14) comprennent des moyens de reconnaissance (16,17) de l'information de fin de traitement de trame reçue afin d'identifier le calculateur ayant émis celle-ci, et des moyens (15) de sélection de la trame suivante à émettre à destination de ce calculateur.

## Description

La présente invention concerne un système de téléchargement de fichiers de données dans des calculateurs embarqués à bord d'un véhicule automobile.

Plus particulièrement, l'invention se rapporte à un tel système de téléchargement dans lequel on utilise un outil de téléchargement qui est adapté pour être raccordé à un réseau de transmission d'informations auquel sont également raccordés les calculateurs.

On utilise déjà dans l'état de la technique de tels outils, soit en ligne de montage, soit en service après vente, pour assurer le téléchargement de fichiers de données dans des calculateurs embarqués à bord de véhicules automobiles.

Les véhicules automobiles comportent en effet de plus en plus de calculateurs, parmi lesquels on trouve des calculateurs multifonctions de moteur, des calculateurs de boite de vitesses automatique, des calculateurs de direction assistée, des calculateurs de boîtier de servitude intelligent, etc....

Différents systèmes de téléchargement des fichiers de données dans ces calculateurs, ont déjà été développés.

C'est ainsi par exemple que ces systèmes peuvent être adaptés pour télécharger de façon séquentielle les calculateurs, c'est-à-dire que les calculateurs sont téléchargés les uns à la suite des autres.

Ce type de téléchargement prend un temps relativement important qui est incompatible avec une utilisation sur chaîne de production en grande série de véhicules.

Une nouvelle voie a alors été développée de téléchargement par émission cyclique de trames de données successives sur le réseau, chacune à destination d'un calculateur correspondant, comme cela est décrit par exemple dans le document FR-A-2 798 484, au nom de la demanderesse.

Le problème de ce dernier système est qu'un fichier unique est créé en tenant compte de la performance des calculateurs à partir des fichiers des différents calculateurs à télécharger, en fonction de la structure et du fonctionnement de ces calculateurs, de sorte que toute modification de cette structure ou de ce fonctionnement doit également se traduire par une modification correspondante du fichier unique par réorganisation par exemple des trames, ce qui se traduit par la nécessité de gérer des références distinctes des fichiers pour le constructeur.

Le but de l'invention est donc de résoudre ces problèmes.

A cet effet, l'invention a pour objet un système de téléchargement de fichiers de données dans des calculateurs embarqués à bord d'un véhicule automobile, à l'aide d'un outil de téléchargement adapté pour être raccordé à un réseau de transmission d'informations auquel sont également raccordés les calculateurs, l'outil étant adapté pour mettre en oeuvre un téléchargement multicalculateurs et comportant des moyens de formation de trames de données à partir des fichiers correspondants pour ces calculateurs et des moyens d'émission de celles-ci à destination des calculateurs correspondants à travers le réseau, les calculateurs étant adaptés pour émettre à destination de moyens de réception correspondants de l'outil, une information de fin de traitement de trame reçue pour piloter les moyens d'émission afin de déclencher l'émission d'une trame suivante sur le réseau, caractérisé en ce que les moyens d'émission comprennent des moyens de reconnaissance de l'information de fin de traitement de trame reçue afin d'identifier le calculateur ayant émis celle-ci, et des moyens de sélection de la trame suivante correspondante à émettre sur le réseau à destination de ce calculateur afin d'adapter en dynamique l'émission des trames à destination des différents calculateurs, en fonction de l'émission par ceux-ci des informations de fin de traitement de trame et optimiser leur téléchargement.

Selon une autre caractéristique, l'outil de téléchargement est adapté pour être relié au réseau du véhicule à travers des moyens de connexion centralisée de celui-ci.

Selon encore une autre caractéristique, ce système comporte des moyens de stockage des trames formées pour chaque calculateur, associés à des moyens de multiplexage adaptés pour être raccordés au réseau du véhicule et pilotés par des moyens de commande raccordés aux moyens de réception des informations de fin de traitement de trame, pour sélectionner la trame suivante à émettre.

L'invention sera mieux comprise à la lecture de la description qui va suivre, donnée uniquement à titre d'exemple et faite en se référant aux dessins annexés, sur lesquels :
- les Figs. 1 et 2 représentent des chronogrammes illustrant le fonctionnement d'un système de téléchargement de l'état de la technique ; et
- la Fig.3 représente un schéma synoptique illustrant la structure d'un système de téléchargement selon l'invention.

On sait qu'il existe dans l'état de la technique, des systèmes de téléchargement de fichiers de données dans des calculateurs embarqués à bord d'un véhicule automobile, à l'aide d'un outil de téléchargement adapté pour être raccordé à un réseau de transmission d'informations auquel sont également raccordés les calculateurs.

On pourra par exemple se reporter au document mentionné précédemment pour une description d'un tel système.

L'outil est alors adapté pour mettre en oeuvre un téléchargement multicalculateurs, c'est-à-dire qu'il assure le téléchargement de plusieurs calculateurs à la fois, ce qui est à comparer au téléchargement séquentiel de ceux-ci, dans lequel les calculateurs sont téléchargés les uns à la suite des autres.

L'outil comporte alors des moyens de formation de trames de données à partir des fichiers correspondants pour ces calculateurs et des moyens d'émission de ces trames à destination des calculateurs correspondants à travers le réseau, à partir d'un fichier unique créé à cet effet.

Les calculateurs sont alors adaptés pour émettre à destination de moyens de réception correspondants de l'outil, une information de fin de traitement de trame reçue, pour piloter les moyens d'émission afin de déclencher l'émission d'une trame suivante sur le réseau.

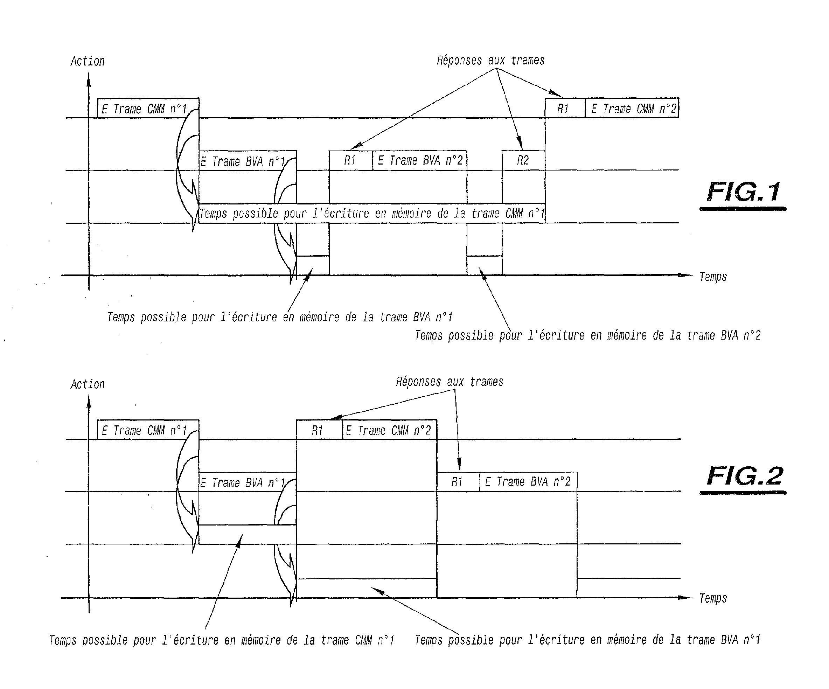

Ceci est illustré sur les figures 1 et 2, pour un exemple d'un système de téléchargement de deux calculateurs, l'un de contrôle multi-fonctions de moteur ou calculateur CMM, et l'autre de boite de vitesses automatique ou calculateur BVA, à télécharger.

Dans l'exemple illustré, le calculateur CMM est moins performant que celui de BVA dans la mesure où l'on peut transmettre deux trames de téléchargement au calculateur BVA pendant le traitement des données d'une trame reçue par le calculateur CMM.

Lorsque l'on définit le fichier unique des trames à transmettre sur le réseau à partir des fichiers correspondants au calculateur CMM et au calculateur BVA, la répartition des trames est la suivante :

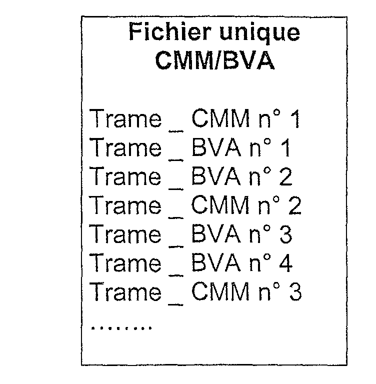

On constate à la lumière de ce tableau et la vue de la figure 1, que la première trame émise sur le réseau par l'outil est une trame CMM n° 1 (E Trame CMM n°1).

Les deuxième et troisième trames émises sur le réseau sont des trames BVA n°1 et BVA n° 2 (E Trame BVA n° 1 et n°2).

On voit en effet apparaître à la lumière de la figure 1 que l'information de fin de traitement de trame émise par le calculateur CMM (R1), n'arrive qu'au bout d'une période de temps relativement longue, ce qui permet à l'outil de téléchargement, d'émettre deux trames à destination du calculateur BVA, dans la mesure où celui-ci est beaucoup plus performant en terme de traitement de trame que le calculateur CMM.

Si maintenant au cours de la durée de vie d'un véhicule, le calculateur CMM est remplacé ou modifié d'une façon ou d'une autre, par exemple en changeant la technologie de ses moyens de mémorisation de données, soit parce qu'un nouveau composant développé est moins cher soit parce que l'ancien composant ne se fabrique plus, pour pouvoir bénéficier d'une amélioration des performances du système de téléchargement, il faut pour tenir compte de cette amélioration des caractéristiques de traitement du calculateur CMM, changer la structure du fichier unique créé.

Dans l'exemple décrit, on va estimer que le calculateur CMM présente les mêmes caractéristiques de traitement que le calculateur BVA, après son remplacement.

Ainsi, les vitesses de traitement des trames par le nouveau calculateur CMM et BVA sont équivalentes.

Il convient alors de modifier la structure du fichier unique créé pour le calculateur CMM et le calculateur BVA.

Celui-ci devient alors le suivant :

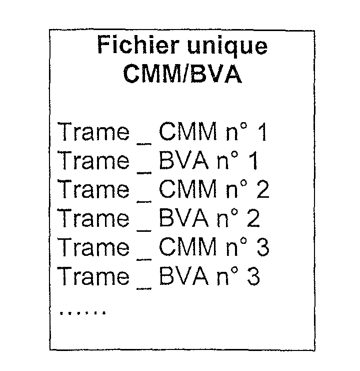

Les trames à destination du calculateur de multifonctions moteur CMM et du calculateur de boîte de vitesses automatique BVA sont alors entrelacées, l'une étant destinée au calculateur CMM et l'autre, au calculateur BVA et ainsi de suite.

Le traitement correspondant par les calculateurs ressort de la figure 2, où l'on voit que les trames sont émises alternativement à destination du calculateur CMM et du calculateur BVA.

On voit ressortir à la lumière de ces explications que le constructeur a alors à gérer deux références distinctes de fichiers pour pouvoir assurer la gestion des systèmes embarqués.

Comme cela a été indiqué précédemment, le but de l'invention est de résoudre ces problèmes.

Cependant, il convient tout d'abord d'analyser les différentes composantes qui participent au temps de téléchargement d'un fichier dans un calculateur.

La première composante est le temps de contrôle qui regroupe un ensemble de services, à savoir :
- initialisation de la communication ;.
- identification du fichier et du calculateur ;
- déverrouillage (protection de la mémoire par un accès sécurisé) ;
- effacement de la mémoire ;
- auto-contrôle du code reçu et écrit en mémoire ;
- traçabilité du fichier programmé ; et
- fin de communication.

La deuxième composante est le temps de transfert et de réponse du calculateur qui est directement dépendant du débit du réseau utilisé et de la bande passante disponible.

La troisième composante est le temps d'écriture des données du fichier en mémoire et qui dépend forcément de la technologie du composant utilisé.

Pour améliorer la rapidité du téléchargement, il est proposé d'optimiser le temps total alloué à l'opération de téléchargement en masquant autant que possible, le temps d'écriture des données en mémoire et de traitement des requêtes émises par l'outil de téléchargement à destination d'un calculateur, par du transfert de trames vers les autres calculateurs, et ce, de façon dynamique et automatique en fonction des performances de chacun de ceux-ci.

Bien entendu, ceci se fait en restant conforme aux standards de communication normalisés adoptés par exemple au niveau européen par l'ensemble des constructeurs de véhicules automobiles, à savoir par exemple en utilisant les protocoles KEYWORD 2000 et ISO 15 765, définissant la segmentation des requêtes KEYWORD 2000 lors d'une utilisation d'un réseau CAN par exemple.

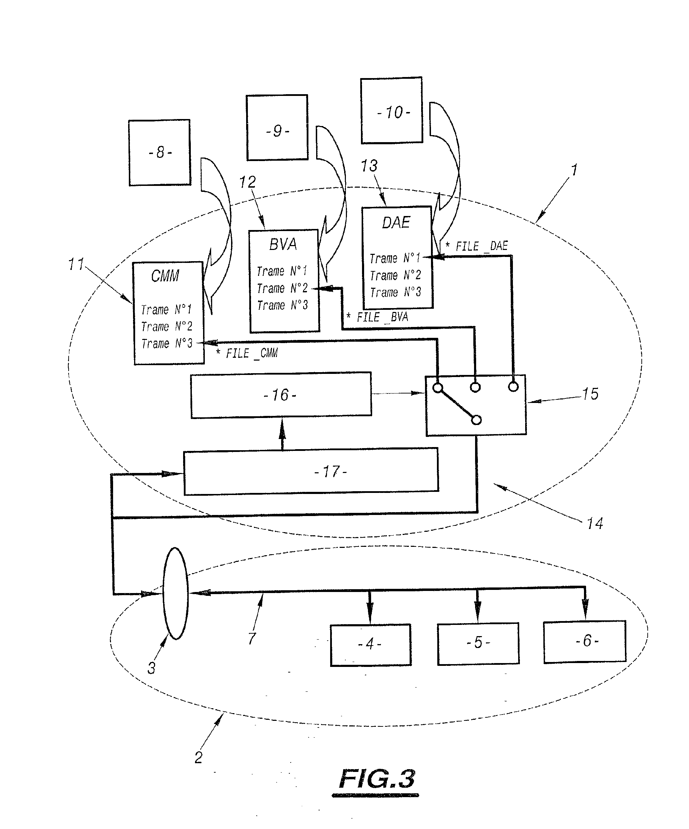

Ceci est illustré sur la figure 3, où l'on a représenté un schéma synoptique illustrant la structure générale et le fonctionnement d'un système de téléchargement selon l'invention.

Ce système comporte deux grandes parties, à savoir, un outil de téléchargement désigné par la référence générale 1 et un véhicule désigné par la référence générale 2.

Ces deux parties peuvent être reliées à travers des moyens de connexion centralisée du véhicule, désignés par la référence générale 3 et comprenant par exemple des connecteurs complémentaires du véhicule et de l'outil, qui peuvent être assemblés ou désassemblés lorsque l'on souhaite assurer le téléchargement.

Dans l'exemple décrit, le système informatique embarqué à bord du véhicule comporte trois calculateurs désignés par les références 4,5 et 6, raccordés par un réseau de transmission d'informations désigné par la référence générale 7.

Ainsi par exemple, le calculateur 4 peut être un calculateur multi-fonctions de moteur CMM, le calculateur 5, un calculateur de boîte de vitesses automatique BVA et le calculateur 6, un calculateur de direction assistée DAE.

Bien entendu, un nombre différent de calculateurs peut être envisagé.

Chacun de ces calculateurs est associé à un fichier de données correspondantes à télécharger, ces fichiers étant désignés par les références 8,9 et 10 respectivement.

Ces fichiers de livraison qui sont les mêmes que ceux livrés aux services après-vente sont livrés avec les calculateurs correspondants par un fournisseur.

A partir de ces fichiers, on forme des trames de données pour les différents calculateurs et ces trames sont stockées dans des moyens de stockage correspondants de l'outil, désignés par les références 11,12 et 13 respectivement pour les trames CMM, BVA et DAE.

Ces moyens de stockage des trames sont reliés à des moyens d'émission de celles-ci à destination des calculateurs correspondants à travers le réseau, ces moyens d'émission étant désignés par la référence générale 14 sur cette figure et comportant des moyens de multiplexage 15 raccordés en entrée aux moyens de stockage 11,12,13 des trames associées aux différents calculateurs et en sortie aux moyens de connexion centralisée du véhicule pour permettre l'émission des trames à destination des calculateurs à travers le réseau 7.

Ces moyens de multiplexage 15 sont pilotés par des moyens de commande désignés par la référence générale 16 eux-mêmes raccordés à des moyens 17 de réception d'une information de fin de traitement de trame, pour piloter les moyens d'émission afin de déclencher l'émission d'une trame suivante sur le réseau.

En fait, et comme cela a été indiqué précédemment, les calculateurs sont adaptés pour émettre à destination de l'outil, une information de fin de traitement de trame reçue.

Dans le système selon l'invention, les moyens de commande 16 sont adaptés pour reconnaître l'information de fin de traitement de trame reçue en provenance d'un calculateur afin d'identifier ce calculateur pour sélectionner grâce aux moyens de multiplexage, la trame suivante correspondante à émettre sur le réseau à destination de ce calculateur, ce qui permet d'adapter en dynamique, l'émission des trames à destination des différents calculateurs, en fonction de l'émission par ceux-ci des informations de fin de traitement de trame et ainsi d'optimiser leur téléchargement.

On conçoit alors que ceci permet de réaliser un entrelacement des trames transmises sur le réseau, qui s'adapte de façon dynamique et automatique en fonction des performances des calculateurs et des longueurs des fichiers associés.

Concrètement, ceci est obtenu en disposant un pointeur de trame indépendant pour chaque fichier de calculateur, ces pointeurs étant par exemple appelés *FILE_ CMM, *FILE_ BVA et *FILE_ DAE sur cette figure 3.

Ces pointeurs sont capables d'évoluer de façon indépendante les uns des autres afin de pouvoir transmettre plusieurs trames à un calculateur qui traite les trames très rapidement, c'est-à-dire par exemple s'il les écrit très vite en mémoire, pendant qu'un autre calculateur ne recevra ses trames qu'à un rythme moins soutenu, plus adapté à sa technologie.

Ceci est alors réalisé automatiquement par le fait que pour pouvoir envoyer une nouvelle trame sur le réseau vers un calculateur, il suffit de détecter que l'on a bien obtenu une réponse à la trame précédente, ce qui est réalisé dans l'outil grâce aux moyens de réception 17 et aux moyens de commande 16, qui sont adaptés pour reconnaître l'information de fin de traitement de trame reçue et sélectionner la trame suivante correspondante à émettre à destination du calculateur correspondant sur le réseau.

Ceci permet d'obtenir un gain de temps non négligeable, non seulement sur l'opération de téléchargement proprement dite, mais également sur l'opération de développement du système, car il n'y a pas de fichier unique à créer, ce qui dans l'état de la technique était réalisé de façon plus ou moins empirique, pour chaque combinaison possible de calculateurs des véhicules.

On conçoit également qu'en cas d'évolution dans la vie d'un produit, par exemple par remplacement d'un calculateur de technologie obsolète par un calculateur plus performant ou utilisation de moyens de stockage d'informations plus performants, le même fichier et la même structure peuvent être reconduits, car l'outil de téléchargement adapte de façon automatique, le débit de trames vers ce nouveau calculateur en fonction de cette nouvelle technologie, dans la mesure où ce débit est régulé par la réception par l'outil, de l'information correspondante de fin de traitement de trame.

Ceci n'aurait pas été le cas avec un fichier unique de l'état de la technique, dans la mesure où il aurait fallu le modifier comme cela a été expliqué précédemment afin de l'adapter aux nouvelles caractéristiques du nouveau calculateur.

On conçoit que cette structure présente un certain nombre d'avantages dans la mesure où elle permet le téléchargement de plusieurs calculateurs d'un véhicule en une seule opération, par exemple dans les dernières minutes de l'assemblage du véhicule en usine, directement dans la chaîne de production, depuis un outil de téléchargement unique.

Le raccordement de l'outil de téléchargement au réseau du véhicule se fait de façon très simple, par exemple sur une prise de connexion centralisée disponible sur tout véhicule.

Ceci permet également de réduire la diversité des pièces à produire pour le fournisseur, car il y a moins de références de calculateurs à gérer, dans la mesure où les calculateurs ne sont plus livrés téléchargés chez le constructeur de véhicules.

Il est donc possible de réduire les zones de stockage de ces pièces en usine par réduction de la diversité d'approvisionnement des pièces, de simplifier le montage pour l'opérateur en ligne, car là aussi, il y a une diversité réduite de pièces autour de lui, donc moins de risque d'erreurs et de simplifier la gestion des approvisionnements tout en limitant des risques de pénuries de pièces, car comme il y a moins de références produites, il y a moins de pièces à stocker dans les magasins de pièces de rechange, par exemple en service après-vente.

Le temps de téléchargement global est optimisé par une auto-adaptation du temps de téléchargement de chaque calculateur et cette optimisation du temps de téléchargement global s'effectue en tenant compte pour chaque calculateur de ses performances, et en particulier des performances de ses moyens de stockage d'informations, formés par exemple d'une mémoire de type FLASH EPROM, car suivant la technologie du composant utilisé et la taille de son fichier de téléchargement, le temps d'écriture en mémoire est variable.

Enfin, les formats des fichiers de téléchargement livrés par les fournisseurs sont identiques pour le montage et pour le réseau d'après-vente.

Comme il n'est pas constitué chez le constructeur, de fichier unique regroupant l'ensemble des fichiers à télécharger dans un véhicule, le fournisseur peut continuer à livrer un calculateur et un fichier de téléchargement avec un format initial déjà retenu pour la procédure chez le constructeur et ce format de fichier est exactement le même que celui livré en service après-vente.

Les clauses de responsabilité sont donc conservées, car les fichiers de livraison ne sont pas transformés et qu'il n'y a pas lieu de gérer de références supplémentaires.

## Revendications

1. Système de téléchargement de fichiers de données dans des calculateurs embarqués à bord d'un véhicule automobile, à l'aide d'un outil de téléchargement (1) adapté pour être raccordé à un réseau de transmission d'informations (7) auquel sont également raccordés les calculateurs (4,5,6), l'outil étant adapté pour mettre en oeuvre un téléchargement multicalculateurs et comportant des moyens (11,12,13) de formation de trames de données à partir des fichiers correspondants (8,9,10) pour ces calculateurs et des moyens (14) d'émission de celles-ci à destination des calculateurs correspondants à travers le réseau, les calculateurs étant adaptés pour émettre à destination de moyens (17) de réception correspondants de l'outil, une information de fin de traitement de trame reçue pour piloter les moyens d'émission (14) afin de déclencher l'émission d'une trame suivante sur le réseau, **caractérisé en ce que** les moyens d'émission (14) comprennent des moyens (16,17) de reconnaissance de l'information de fin de traitement de trame reçue afin d'identifier le calculateur ayant émis celle-ci, et des moyens (15) de sélection de la trame suivante correspondante à émettre sur le réseau (7) à destination de ce calculateur afin d'adapter en dynamique l'émission des trames à destination des différents calculateurs, en fonction de l'émission par ceux-ci des informations de fin de traitement de trame et optimiser leur téléchargement.

2. Système selon la revendication 1, **caractérisé en ce que** l'outil de téléchargement (1) est adapté pour être relié au réseau (7) du véhicule à travers des moyens (3) de connexion centralisée de celui-ci.

3. Système selon la revendication 1 ou 2, **caractérisé en ce qu'**il comporte des moyens de stockage (11,12,13) des trames formées pour chaque calculateur, associés à des moyens de multiplexage (15) adaptés pour être raccordés au réseau (7) du véhicule et pilotés par des moyens de commande (16) raccordés aux moyens de réception (17) des informations de fin de traitement de trame, pour sélectionner la trame suivante à émettre.
